# EUROPÄISCHE PATENTSCHRIFT

(11) **EP 1 011 956 B1**
(45) Veröffentlichungstag und Bekanntmachung des Hinweises auf die Patenterteilung: **19.03.2003**
(21) Anmeldenummer: 98922799.6
(22) Anmeldetag: 05.05.1998
(51) Int. Cl.: B29C 59/12, H01T 19/00

(54) **VORRICHTUNG ZUR KORONABEHANDLUNG DER OBERFLÄCHE EINES SUBSTRATS**
CORONA-TYPE DEVICE FOR TREATING A SUBSTRATE SURFACE
DISPOSITIF DE TRAITEMENT DE TYPE CORONA DE LA SURFACE D'UN SUBSTRAT

(30) Priorität: 30.07.1997 DE 19732901
(43) Veröffentlichungstag der Anmeldung: 28.06.2000
(73) Patentinhaber: Könemann, Rita, 33790 Halle (DE); Bolte, Georg, Dr., D-33790 Halle (DE)
(72) Erfinder: BOLTE, Georg, Dr., D-33790 Halle (DE); KÖNEMANN, Rita, D-33790 Halle (DE); KLUTH, Stefan, D-34431 Marsberg (DE)
(74) Vertreter: Möller, Friedrich, Dipl.-Ing.
(86) Internationale Anmeldenummer: EP9802632
(87) Internationale Veröffentlichungsnummer: WO99006204

(56) Entgegenhaltungen:
- EP-A- 0 381 044
- DE-A- 3 935 013
- DE-U- 29 601 212
- GB-A- 2 086 144
- US-A- 4 533 523
- PATENT ABSTRACTS OF JAPAN vol. 013, no. 394 (C-631), 31. August 1989 & JP 01 138242 A (TORAY IND INC), 31. Mai 1989
- PATENT ABSTRACTS OF JAPAN vol. 008, no. 071 (C-217), 3. April 1984 & JP 58 225133 A (TOYO BOSEKI KK), 27. Dezember 1983

## Beschreibung

Die Erfindung betrifft eine Vorrichtung mit den im Oberbegriff des Anspruchs 1 angegebenen Merkmalen.

Eine derartige Vorrichtung ist aus der EP 0 279 371 A1 bekannt. Dort ist eine Anordnung zur Oberflächenvorbehandlung von Kunststoff mittels einer elektrischen Koronaentladung beschrieben, wobei im Innenraum eines Gehäuses mehrere Elektroden angeordnet sind und in die Koronaentladungszone mittels eines Luft- oder Gasstroms ein Aerosol eingebracht wird. Es handelt sich also um eine speziell für die Oberflächenbehandlung von Kunststoff konzipierte Anordnung, wobei besondere Vorkehrungen für eine Kühlung nicht vorgesehen sind, was auch nicht notwendig ist, weil eine Erwärmung (vergl. Anspruch 8) nur auf eine Temperatur von 20° bis 95° C erfolgt.

Aus der DE 39 35 013 C2 ist es bekannt, daß zur Koronabehandlung von vorzugsweise mehrfach beschichteten Materialbahnen Koronaelektroden verwendet werden, die in einem Betriebstemperatur-Bereich von etwa 100° C oder mehr und damit ozonfrei arbeiten, wobei die Koronaelektroden außerhalb ihrer Betriebsstellung an Hilfselektroden angelegt werden. Die Koronaelektroden sind dabei als CFC-Kohlenstoffaserkörper ausgebildet, die aber nicht völlig temperaturbeständig sind und bei hohen Spannungen von mehr als 15.000 V zu elektrischer Leitung neigen. Das Problem der Kühlung ist in der genannten Druckschrift bei der Würdigung des Standes der Technik in der Beschreibungseinleitung erwähnt, nämlich dahingehend, daß Ozonabsaugungen vorgenommen werden, wodurch die Koronaelektrode auch gekühlt wird.

In der DE 34 14 245 C2 ist beschrieben, daß zum dichten Belegen von Festkörperoberflächen mit feinen Flüssigkeitströpfchen durch Ultraschallvernebelung Tröpfchen erzeugt werden, die elektrisch aufgeladen und auf die Oberfläche niedergeschlagen werden.

Aus der DE 24 27 933 A1 ist eine Elektrode für eine Vorrichtung Koronaentladung bekannt, die einen dielektrischen Überzug aufweist. Im Innenraum der Elektrode ist ein Hohlraum vorhanden, durch den ein Kühlmittel geleitet wird, welches die Wärme von der Coronaentladungsstelle fort transportiert. Durch die Molekülbewegung insbesondere dann, wenn die Temperatur des Kühlmittels in den Siedebereich gekommen ist, entsteht an der Wärmequelle ein intensiver Kühleffekt. Es entsteht ein Kreislauf, da das erwärmte Kühlmittel nach oben in den Bereich der Kühlrippen steigt, dort kondensiert und dann durch das Eigengewicht im abgekühlten Zustand sich zu der Elektrodenspitze bewegt. Es handelt sich dabei um eine direkte Kühlung.

In der DE 33 41 784 A1 ist eine Koronaentladungsvorrichtung beschrieben, bei welcher ein Bearbeitungsbalken Elektrodensegmente enthält, die jeweils ein äußeres becherförmiges Teil aus einem keramischen, dielektrischen Material enthalten, welches ein leitfähiges Bauteil, beispielsweise aus Aluminium, umgibt.

Die JP-A-01 138 242 zeigt eine Vorrichtung zur Oberflächenbehandlung von Kunststoffolien mit einer elektrode, die in ihrem Inneren Kühlkanäle aufweist. Eine weitere Vorrichtung zur Oberflächenbehandlung von Gegenständen durch Sprühentladung ist in der DE 195 08 933 A1 beschrieben. Die Sprühelektrode ist dabei aus einer Arbeitsstellung in eine Ladestellung unter Verwendung von Klemmleisten linear verschiebbar angeordnet. Die erforderliche Klemmhalterung soll dort einfach gestaltet und leicht montierbar sein und dennoch die Sprühelektrode in ausreichend genauem Abstand parallel zur Führungselektrode gehalten sein. Über eine Elektrodenkühlung ist in dieser Veröffentlichung nichts ausgesagt.

Der Erfindung liegt die Aufgabe zugrunde, die Vorrichtung zur Koronabehandlung so auszubilden, daß durch eine indirekte Kühlung der Elektrode die Bildung schädlicher Stoffe, z.B. Ozon, vermieden wird und sie eine minimale Baugröße aufweist.

Diese Aufgabe wird mit den im Anspruch 1 angegebenen Merkmalen gelöst.

Die indirekte Kühlmethode ist deshalb gewählt, um eine hohe Temperaturführung an der keramischen Oberfläche zu erhalten. Dadurch gelingt eine sofortige Einleitung der Ozonzerfallreaktion; die Halbwertzeit von Ozon ist bekanntermaßen stark temperaturabhängig.

Durch die Kühlung des Gehäuses zur Umgebung mittels eines das Gehäuse durchfließende Kühlmediums, z.B. Wasser, werden einen größeren Raum benötigende Abluftgebläse, die beim Stand der Technik auch wegen der Ozonentstehung nötig sind, vermieden. Die fehlenden Albluftgebläse ermöglichen erfindungsgemäß die Einspeisung von Trägergasen, um zusätzliche Effekte zu erzielen. Das Gehäuse wird außen durch die Kühlung auf einer Temperatur von unter 50° C gehalten, wodurch das Bedienungspersonal vor Verbrennungen geschützt ist. Gemäß der Erfindung wird die Ozonentstehung durch die hohe Betriebstemperatur an der Elektrodenoberfläche vermieden oder zumindest vermindert, so daß eine Absaugung nicht unbedingt erforderlich ist. Bei der hohen Betriebstemperatur kommt es zu spontanen Zerfallserscheinungen von Ozon zu Sauerstoff. Die hohe Betriebstemperatur wird durch die ständige Belastung/Entladung der aus nicht leitendem Material bestehenden Elektrode aufrechterhalten.

Als zu behandelnde Oberfläche sind auch bereits behandelte, z.B. lackierte oder beschichtete Oberflächen anzusehen. Als Trägergas ist z.B. ein Flüssigkeitströpfchen enthaltendes Gas (Aerosol) oder auch ein Feststoffpartikel enthaltendes Gas (Rauch, Stäube) zu verstehen. Aber auch ein reaktives Gasgemisch ist einsetzbar. Vorteilhafte weitere Ausgestaltungen der Vorrichtung nach Anspruch 1 sind Gegenstand der Unteransprüche.

Dabei befassen sich die Ansprüche 2 bis 6 mit der Bewegung der Elektrode zwischen einer Arbeitsposition und einer Ruheposition sowie mit dem Schutz der in die Ruheposition gebrachten Elektrode gegen mechanische Zerstörung, die Ansprüche 7 bis 9 mit der Ausgestaltung einer Düsenanordnung im Gehäuse zur Einspeisung des Trägergases und zur Wiedereinspeisung eines regenerierten Trägergases in den Elektrodenraum.

Im folgenden wird die Erfindung anhand von in der Zeichnung schematisch dargestellten Ausführungsbeispielen näher erläutert. Es zeigt:
- Fig. 1: das Gehäuse im Querschnitt;
- Fig. 2: die Vorrichtung gemäß der Erfindung in perspektivischer Darstellung, teilweise geschnitten:
- Fig. 3: die Vorrichtung mit der Elektrode in Arbeitsposition;
- Fig. 4: die in Fig. 3 gezeigte Vorrichtung, allerdings ohne Elektrodenhalterung, gezeichnet in der Ruheposition;
- Fig. 5: die im Gehäuse untergebrachte Düsenanordnung mit Darstellung ihrer Funktion;
- Fig. 6: eine Einzelheit der in Fig. 5 gezeigten Düsenanordnung in vergrößerter Darstellung.

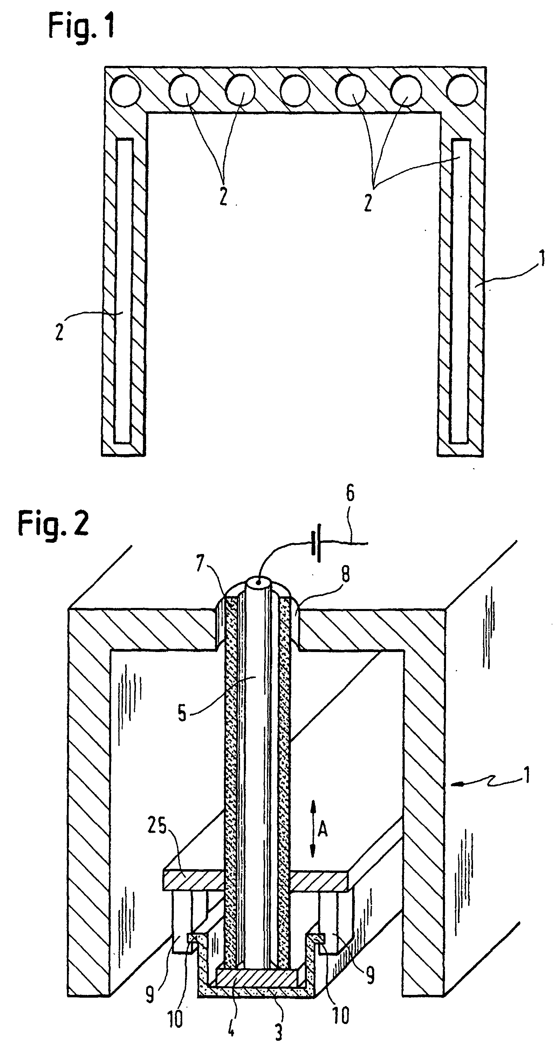

Das in Fig. 1 dargestellte Gehäuse 1 hat im Querschnitt die Form eines umgekehrten U. Das z.B. aus Aluminium bestehende Gehäuse 1 ist in Längsrichtung mit Ausnehmungen 2 zum Durchfluß eines Kühlmediums, z.B. Wasser, versehen. Die Ausnehmungen 2 im Steg des U sind dabei rohrartig ausgebildet, die Ausnehmungen 2 in den Schenkeln des U haben den Querschnitt eines langgestreckten Rechtecks. Das Gehäuse 1 ist seitlich durch Stirnwände abgeschlossen.

In Fig. 2 ist die Vorrichtung zur Koronabehandlung mit einer im Gehäuse 1, das hier ohne die Ausnehmungen 2 dargestellt ist, untergebrachten Elektrode 3 dargestellt. In der im Querschnitt etwa hutförmig ausgebildeten Elektrode 3 ist eine Elektrodenplatte 4 z.B. aus Aluminium untergebracht. Die Elektrodenplatte 4 steht über einer elektrische Zuleitung 5 mit einem außerhalb des Gehäuses 1 angeordneten, flexiblen elektrischen Anschluß 6 in Verbindung. Die elektrische Zuleitung 5 ist von einem Isolationsrohr 7 umgeben, das aus Keramik besteht und eine Isolationswirkung gegenüber dem Gehäuse 1 hat. Die elektrische Zuleitung 5 kann mit dem Isolationsrohr 7 durch eine Öffnung 8 im Steg des U bewegt werden.

Mit der Elektrode 3 wirken Greifer 9 zusammen, die über eine Mechanik in Richtung der Pfeile A bewegbar sind und die Elektrode 3 aus einer Arbeitsposition in eine Ruheposition und umgekehrt bringen. Die Greifer 9 greifen beim Ausführungsbeispiel an den nach außen gerichteten Flanschen 10 des hutförmigen Profils der Elektrode 3 an. Die Greifer 9 bestehen aus thermisch haltbarem Material, weil sie der Betriebstemperatur ausgesetzt sind, und sind an einer in Richtung der Pfeile 1 beweglichen Halteplatte 25 befestigt. Die Mechanik zum Bewegen der Halteplatte 25 besteht z.B. aus Gewindestangen, die mit Gewindebohrungen in der Halteplatte 25 zusammenwirken.

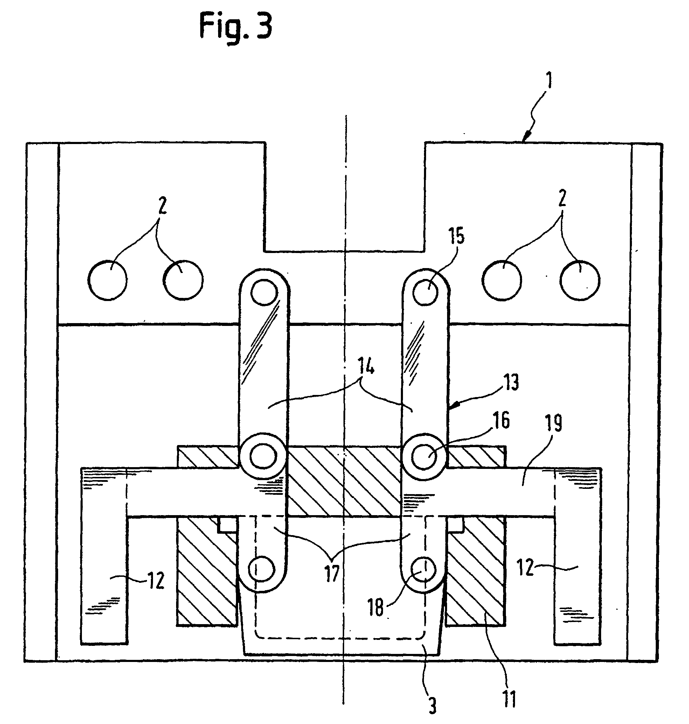

In Fig. 3 ist die Elektrode 3, die hier mit einem Elektrodenhalter 11, der in seiner Funktion den Greifern 9 mit der Halteplatte 25 entspricht, versehen ist, in Arbeitsposition, also nahe an der Oberfläche des zu behandelnden Substrats, dargestellt.

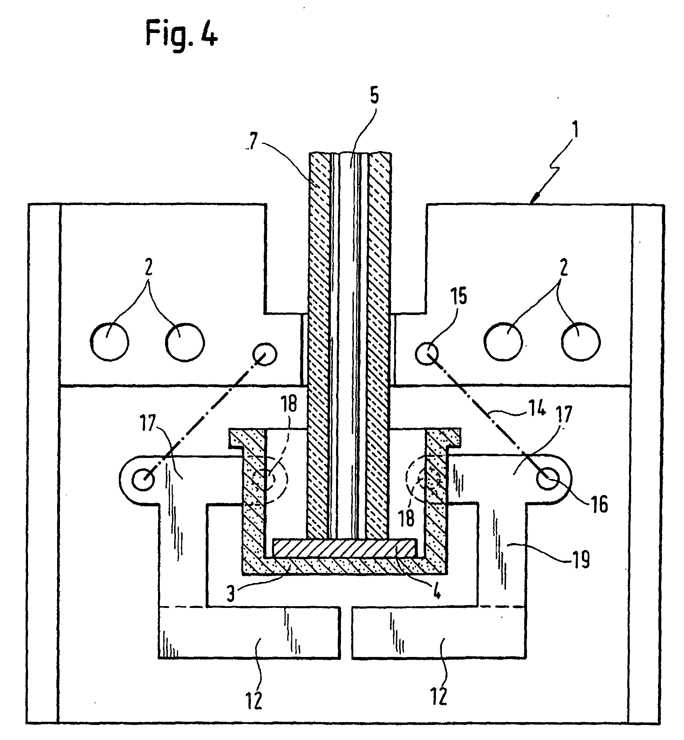

Eine die Elektrode 3 in Ruheposition (Fig. 4) schützende, geteilte Verschlußklappe 12 ist in Fig. 3 in geöffneter Stellung dargestellt. Zum Bewegen der Verschlußklappe 12 dient ein kniehebelartiges Hebelgestänge 13. Das Hebelgestänge 13 besteht im wesentlichen aus einem Hebel 14, dessen eines Ende über einen Drehpunkt 15 mit dem Steg des Gehäuses 1 und dessen anderes Ende über einen Drehpunkt 16 mit einem weiteren Hebel 17 verbunden ist, der über einen Drehpunkt 18 seitlich an der Elektrode 3 angelenkt ist.

Das Hebelgestänge 13 ist seitlich an der Elektrode 3 bzw. am Elektrodenhalter 11 angelenkt.

An den Hebel 17 ist seitlich jeweils ein damit fest verbundener Steg 19 angeordnet, der jeweils eine Hälfte der plattenförmigen Verschlußklappe 12 trägt, die über die Länge der Elektrode 3 verläuft.

Das Hebelgestänge 13 muß so ausgebildet sein, daß es bei einer Aufwärtsbewegung der Elektrode 3 aus der in Fig. 3 gezeigten Arbeitsposition seitlich ausknicken kann.

In Fig. 3 ist die elektrische Verbindung der Elektrode 3 nicht dargestellt, in Fig. 4 der Elektrodenhalter 11.

Um die Elektrode 3 auch in Ruheposition auf Betriebstemperatur zu halten, ist es zweckmäßig, in dieser Position für weitere Entladung gegen die Verschlußklappe 12 zu sorgen.

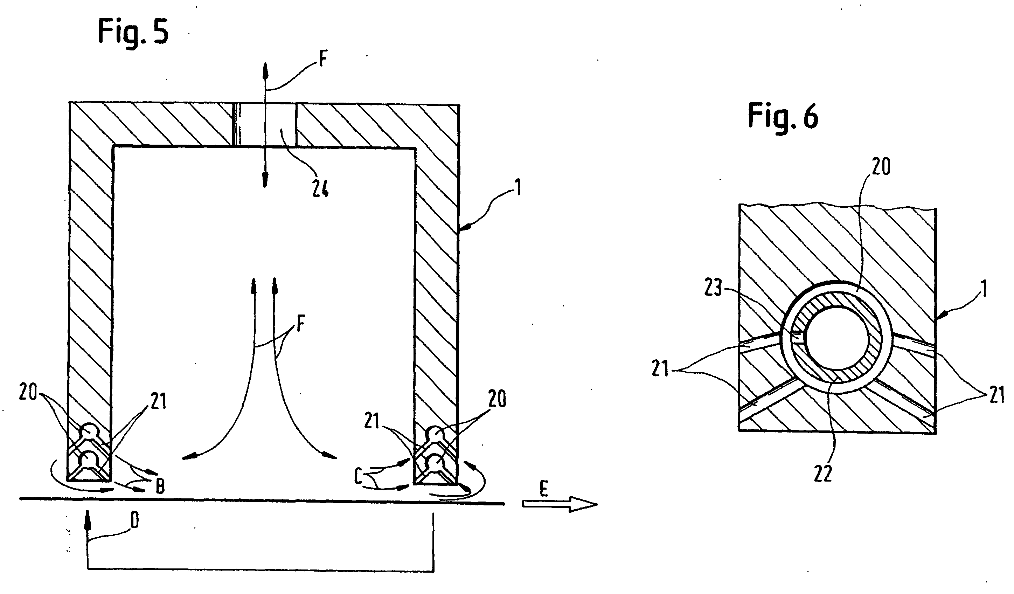

In den Fig. 4 und 5 ist die in den unteren Enden der Stege des Gehäuses 1 untergebrachte Düsenanordnung dargestellt. Sie besteht im wesentlichen aus in Längsrichtung des auch hier ohne die Ausnehmungen 2 dargestellten Gehäuses 1 verlaufenden, zylindrischen Ausnehmungen 20, die über Düsenöffnungen 21 mit der Außenseite und mit der Innenseite der Stege verbunden sind, und aus in den Ausnehmungen 20 drehbar gelagerten Rohren 22, deren Wandung mit mindestens einer Durchbrechung 23 versehen ist. Die Durchbrechung 23 kann schlitzförmig oder punktförmig sein.

Durch Drehen des Rohres 22 wird eine Durchbrechung 23 mit einer Düsenöffnung 21 in Deckung gebracht, so daß je nach Wunsch das Trägergas dem Elektrodenraum zugeführt oder aus diesem abgesaugt wird. Die Zufuhr ist durch die Pfeile B, die Absaugung durch die Pfeile C dargestellt.

Es ist zweckmäßig, das abgesaugte Gas über einen Zirkulationskreis, der durch den Pfeil D dargestellt ist, nach Regeneration wieder dem Elektrodenraum zuzuführen.

Die Bewegung des Substrats, dessen Oberfläche behandelt werden soll, ist durch den Pfeil E dargestellt. Das Substrat wird in einem geringen Abstand an der sich in Arbeitsposition befindenden Elektrode 3 vorbeigeführt.

Durch die in Fig. 5 gezeigten Pfeile F ist angedeutet, daß in den Innenraum des Gehäuses 1 durch eine in dessen Decke angeordnete Öffnung 24 Trägezgas zugeführt bzw. aus dem Innenraum Gas abgesaugt werden kann.

Beim vorstehend beschriebenen Ausführungsbeispiel ist die Elektrode 3 U-förmig mit innenliegender Elektrodenplatte 4 dargestellt. Die Elektrode kann aber auch jede andere Ausführungsform aufweisen.

## Patentansprüche

1. Vorrichtung zur Koronabehandlung der Oberfläche eines Substrats, mit einer Elektrode (3) aus keramischem Material, die innerhalb eines benachbart zum Substrat angeordneten Gehäuses (1) untergebracht ist, wobei Mittel vorgesehen sind, um dem die Elektrode (3) aufnehmenden Innenraum des Gehäuses (1) ein Trägergas zuzuführen, **dadurch gekennzeichnet, dass** das Gehäuse (1) mit innerhalb der Gehäusewände verlaufenden Ausnehmungen (2) für den Durchfluss eines Kühlmediums versehen ist und dass die Elektrode (3) zum Betrieb mit einer Temperatur von mehr als 150°C ausgebildet ist.

2. Vorrichtung nach Anspruch 1, **dadurch gekennzeichnet, dass** die Elektrode (3) aus einer relativ dicht am Substrat liegenden Arbeitsposition in eine vom Substrat weiter entfernte Ruheposition überführbar ist.

3. Vorrichtung nach Anspruch 2, **dadurch gekennzeichnet, dass** eine geteilte Verschlussklappe (12) vorgesehen ist, die bei Bewegung der Elektrode (3) in die Ruheposition in eine Schließstellung und bei Bewegung der Elektrode (3) in eine Arbeitsposition in eine Öffnungsstellung bringbar ist.

4. Vorrichtung nach Anspruch 2 oder 3, **dadurch gekennzeichnet, dass** für das Bewegen der Elektrode (3) mit ihr zusammenwirkende mechanisch betätigte Greifer (9) angeordnet sind.

5. Vorrichtung nach Anspruch 4, **dadurch gekennzeichnet, dass** die Greifer (9) aus bei Betriebstemperatur thermisch haltberen Material bestehen.

6. Vorrichtung nach einem der Ansprüche 3 bis 5, **dadurch gekennzeichnet, dass** für das Bewegen der Elektrode (3) ein kniehebelartig wirkendes Hebelgestänge (13) angeordnet ist, das mit einem Ende am Gehäuse (1) und mit dem anderen Ende an der Elektrode (3) oder an einem die Elektrode (3) aufnehmenden Elektrodenhalter (4) drehbar befestigt ist.

7. Vorrichtung nach einem der Ansprüche 1 bis 6, **dadurch gekennzeichnet, dass** im Gehäuse (1) beidseitig der Länge der Elektrode (3) eine Düsenanordnung zur Einspeisung des Trägergases in den Elektrodenraum angeordnet ist.

8. Vorrichtung nach Anspruch 7, **dadurch gekennzeichnet, dass** die Düsenanordnung auch zur Absaugung schaltbar ist, wobei das abgesaugte Gas nach Regeneration dem Elektrodenraum wieder zuführbar ist.

9. Vorrichtung nach Anspruch 7 oder 8, **dadurch gekennzeichnet, dass** die Düsenanordnung aus zylindrischen Ausnehmungen (20) mit nach außen bzw. in den Innenraum des Gehäuses (1) führenden Düsenöffnungen (21) und einem in den zylindrischen Ausnehmung (20) drehbaren Rohr (22) mit mindestens einer Durchbrechung (23) besteht.

10. Vorrichtung nach einem der Ansprüche 1 bis 9, **dadurch gekennzeichnet, dass** in der durch einen Steg gebildeten Decke des im Querschnitt die Gestalt eines umgekehrten "U" aufweisenden Gehäuses (1) mindestens eine Öffnung (24) für die Trägergaszufuhr bzw. für die Absaugung angeordnet ist.

## Claims

1. Device for corona treatment of the surface of a substrate, with an electrode (3) made of ceramic material, which is accommodated within a housing (1) arranged alongside the substrate, with means being provided to feed a carrier gas to the interior space of the housing (1), receiving the electrode (3), **characterized in that** the housing (1) is provided with clearances (2) running within the housing walls for the throughflow of a cooling medium and **in that** the electrode (3) is designed for operation at a temperature of over 150°C.

2. Device according to Claim 1, **characterized in that** the electrode (3) can be transferred from a working position, which lies relatively close to the substrate, into a rest position, which is further away from the substrate.

3. Device according to Claim 2, **characterized in that** a divided closure flap (12) is provided, which can be brought into a closing position when the electrode (3) is moved into the rest position and can be brought into an opening position when the electrode (3) is moved into a working position.

4. Device according to Claim 2 or 3, **characterized in that**, for moving the electrode (3), mechanically actuated grippers (9) interacting with it are arranged.

5. Device according to Claim 4, **characterized in that** the grippers (9) consist of material which is thermally stable at operating temperature.

6. Device according to one of Claims 3 to 5, **characterized in that**, for moving the electrode (3), a lever linkage (13) acting in the manner of a toggle lever is arranged, which linkage is pivotably fastened by one end to the housing (1) and by the other end to the electrode (3) or to an electrode holder (4) receiving the electrode (3).

7. Device according to one of the claims 1 to 6, **characterized in that** a nozzle arrangement for feeding the carrier gas into the electrode space is arranged in the housing (1), either side of the length of the electrode (3).

8. Device according to Claim 7, **characterized in that** the nozzle arrangement can also be switched to suction extraction, it being possible for the extracted gas to be fed back to the electrode space after regeneration.

9. Device according to Claim 7 or 8, **characterized in that** the nozzle arrangement comprises cylindrical clearances (20) with nozzle openings (21) leading to the outside or into the interior space of the housing (1) and a tube (2) which can be rotated in the cylindrical clearance (20) and has at least one aperture (23).

10. Device according to one of Claims 1 to 9, **characterized in that** at least one opening (24) for the carrier gas feed or for the suction extraction is arranged in the top, formed by a cross-piece, of the housing (1), which in cross-section has the shape of an inverted "U".

## Revendications

1. Dispositif de traitement corona de la surface d'un substrat, comportant une électrode (3) en céramique qui est logée à l'intérieur d'un boîtier (1) placé à proximité du substrat, des moyens étant prévus pour apporter un gaz porteur à l'intérieur du boîtier (1) recevant l'électrode (3), **caractérisé par le fait que** le boîtier (1) est pourvu d'évidements (2) s'étendant à l'intérieur de ses parois pour le passage d'un fluide de refroidissement, et que l'électrode (3) est faite pour fonctionner à une température supérieure à 150°C.

2. Dispositif selon la revendication 1, **caractérisé par le fait que** l'électrode (3) peut être transportée d'une position de travail située relativement près du substrat à une position de repos plus éloignée du substrat.

3. Dispositif selon la revendication 2, **caractérisé par le fait qu'**il est prévu un volet de fermeture divisé (12) qui peut être mis dans une position fermée lorsque l'électrode (3) va en position de repos et mis dans une position ouverte lorsque l'électrode (3) va en position de travail.

4. Dispositif selon l'une des revendications 2 et 3, **caractérisé par le fait que** pour le mouvement de l'électrode (3) sont prévus des préhenseurs actionnés mécaniquement (9) qui coopèrent avec celle-ci.

5. Dispositif selon la revendication 4, **caractérisé par le fait que** les préhenseurs (9) sont constitués d'une matière thermiquement résistante à la température de fonctionnement.

6. Dispositif selon l'une des revendications 3 à 5, **caractérisé par le fait que** pour le mouvement de l'électrode (3) est prévue une tringlerie à leviers (13) à action du genre genouillère qui est articulée à une extrémité au boîtier (1) et à l'autre extrémité à l'électrode (3) ou à un porte-électrode (4) recevant l'électrode (3).

7. Dispositif selon l'une des revendications 1 à 6, **caractérisé par le fait que** dans le boîtier (1) est placé des deux côtés de la longueur de l'électrode (3) un dispositif à buses pour l'envoi du gaz porteur dans l'espace d'électrode.

8. Dispositif selon la revendication 7, **caractérisé par le fait que** le dispositif à buses peut aussi mis en aspiration, la gaz aspiré pouvant alors, après régénération, être renvoyé à l'espace d'électrode.

9. Dispositif selon l'une des revendications 7 et 8, **caractérisé par le fait que** le dispositif à buses est constitué d'évidements cylindriques (20) présentant des orifices de buses (21) qui mènent vers l'extérieur ou à l'intérieur du boîtier (1), et d'un tuyau (22) tournant dans l'évidement cylindrique (20) et présentant au moins un trou (23).

10. Dispositif selon l'une des revendications 1 à 9, **caractérisé par le fait que** dans le plafond, formé d'une âme, du boîtier (1) présentant en coupe la forme d'un U renversé est fait au moins un orifice (24) pour l'apport de gaz porteur et l'aspiration.
